# EUROPÄISCHE PATENTSCHRIFT

(11) **EP 4 162 299 B1**
(45) Veröffentlichungstag und Bekanntmachung des Hinweises auf die Patenterteilung: **02.12.2026**
(21) Anmeldenummer: 21731084.6
(22) Anmeldetag: 02.06.2021
(51) Int. Cl.: G01S 17/931

(54) **VERFAHREN UND VORRICHTUNG ZU EINER ERKENNUNG VON VERUNREINIGUNGEN AUF EINER SCHUTZSCHEIBE EINES LIDARSENSORS**
METHOD AND DEVICE FOR IDENTIFYING CONTAMINATION ON A PROTECTIVE SCREEN OF A LIDAR SENSOR
PROCÉDÉ ET DISPOSITIF D'IDENTIFICATION D'UNE CONTAMINATION SUR UN ÉCRAN DE PROTECTION D'UN CAPTEUR LIDAR

(30) Priorität: 09.06.2020 DE 102020115252
(43) Veröffentlichungstag der Anmeldung: 12.04.2023
(73) Patentinhaber: Mercedes-Benz Group AG, 70372 Stuttgart (DE); Robert Bosch GmbH, 70469 Stuttgart (DE)
(72) Erfinder: SCHINDLER, Philipp, 76189 Karlsruhe (DE); SCHARF, Andreas, 70435 Stuttgart (DE)
(74) Vertreter: Liedtke & Partner Patentanwälte
(86) Internationale Anmeldenummer: PCT/EP2021/064777
(87) Internationale Veröffentlichungsnummer: WO 2021/249845

(56) Entgegenhaltungen:
- DE-A1- 102012 021 830
- US-A1- 2008 210 881

## Beschreibung

Die Erfindung betrifft ein Verfahren zu einer Erkennung von Verunreinigungen auf einer Schutzscheibe eines Lidarsensors.

Die Erfindung betrifft weiterhin eine Vorrichtung zu einer Erkennung von Verunreinigungen auf einer Schutzscheibe eines Lidarsensors und eine Verwendung einer solchen Vorrichtung in einem Fahrzeug und/oder Roboter.

Aus der DE 199 48 252 A1 ist ein Verfahren zur Zustandserkennung bei einem System zu einer automatischen Längs- und Querregelung bei einem Kraftfahrzeug, arbeitend nach dem Lidarprinzip zur Verschmutzungserkennung eines Sensors bekannt. Die Zustandserkennung ist von zwei Indikatoren abhängig, die aus von dem Sensor empfangenen und ausgesendeten Signalen gebildet werden. Die Indikatoren werden mit Wichtungsfaktoren gewichtet und zu einer einzigen Wahrscheinlichkeit verknüpft, wobei aus der Wahrscheinlichkeit eine Aussage über eine Verschmutzung des Sensors abgeleitet wird, wenn ein vorgegebener Schwellwert für eine vorgegebene Zeitdauer über-oder unterschritten wird. Dabei wird die Zeitdauer bei einer kleinen Fahrzeuggeschwindigkeit größer als bei einer großen Fahrzeuggeschwindigkeit gewählt. Als Indikatoren werden eine Objektstabilität, welche eine Rate von Detektionsausfällen eines für eine Fahrzeuglängsregelung ausgewählten Zielobjekts angibt, und eine Summe aller während einer Messung detektierten Objekte verwendet.

Weiterhin ist aus der DE 10 2012 112 987 B3 ein optoelektronischer Sensor zur Erfassung und Abstandsbestimmung von Objekten in einem Überwachungsbereich bekannt. Der Sensor weist eine Auswerteeinheit auf, welche ausgebildet ist, ein Sichttrübungsmaß winkelabhängig fur eine Sichttrübung in Richtung eines Sendelichtstrahls des Sensors zu bestimmen.

Die US 2019 / 0 107 609 A1 beschreibt eine Lidar-Vorrichtung mit einem Fremd-Materie-Detektor, welcher einen blockierten Zustand eines Transmissionsfensters der Lidar-Vorrichtung anhand einer Messung eines Signal-Rausch-Verhältnisses erkennt.

Weiterhin beschreibt die US 10 317 534 B2 ein Lidar-System, welches ein in Abschnitte unterteiltes Sichtfeld aufweist. In den Abschnitten wird jeweils ein Rauschniveau ermittelt, wobei anhand der ermittelten Rauschniveaus in dem jeweiligen Abschnitt eine Empfindlichkeit angepasst wird.

Aus der US 2008 / 210 881 A1 ist ein Laserradar bekannt, das ein Senderteil zum Senden von Strahlung an ein entferntes Sondenvolumen, ein Empfängerteil zum Empfang von dem entfernten Sondenvolumen zurückgesandter Strahlung und einen Prozessor zum Analysieren der erfassten zurückgesandten Strahlung umfasst. Das Laserradar ist zum Senden und Empfangen von Strahlung durch einen Fensterabschnitt mit einem zugehörigen Fensterreinigungsgerät zum Reinigen des Fensterabschnitts als Reaktion auf ein Reinigungsaktivierungssignal ausgebildet. Der Prozessor ist so angeordnet, dass er ein Reinigungsaktivierungssignal zum Aktivieren der Fensterreinigungsvorrichtung erzeugt, wenn die Eigenschaften der erfassten zurückgesandten Strahlung auf eine Verringerung der Transmission durch einen Teil des Fensterabschnitts hinweisen. Ist das Laserradar als konisch abtastendes Lidar ausgebildet, wird ein Reinigungsaktivierungssignal erzeugt, wenn eine Leistung der erfassten zurückgesandten Strahlung als Funktion eines Strahlungsübertragungswinkels vom Gerät variiert.

Weiterhin ist aus der DE 10 2012 021 830 A1 ein Verfahren zum Betreiben eines Laserscanners eines Kraftfahrzeugs bekannt, bei welchem mittels eines optischen Senders elektromagnetische Strahlen ausgesendet werden. Mittels eines Avalanche-Photodetektors werden an einem Zielobjekt in einer Umgebung des Kraftfahrzeugs reflektierte Strahlen empfangen und ein elektrisches Empfangssignal wird abhängig von den empfangenen Strahlen bereitgestellt. Mittels einer Auswerteeinrichtung wird das Zielobjekt abhängig von dem elektrischen Empfangssignal detektiert. Mittels einer Steuereinrichtung wird eine elektrische Biasspannung des Avalanche-Photodetektors im Betrieb der Detektionseinrichtung eingestellt. Mittels einer Messeinrichtung wird ein Wert eines Rauschens des elektrischen Empfangssignals erfasst und die Steuereinrichtung stellt die Biasspannung des Avalanche-Photodetektors in Abhängigkeit von dem Wert des Rauschens ein.

Der Erfindung liegt die Aufgabe zu Grunde, ein gegenüber dem Stand der Technik verbessertes Verfahren und eine verbesserte Vorrichtung zu einer Erkennung von Verunreinigungen auf einer Schutzscheibe eines Lidarsensors und eine Verwendung einer solchen Vorrichtung anzugeben.

Die Aufgabe wird erfindungsgemäß gelöst durch ein Verfahren, welches die im Anspruch 1 angegebenen Merkmale aufweist, durch eine Vorrichtung, welche die im Anspruch 9 angegebenen Merkmale aufweist, und durch eine Verwendung, welche die im Anspruch 11 angegebenen Merkmale aufweist.

Vorteilhafte Ausgestaltungen der Erfindung sind Gegenstand der Unteransprüche.

In dem Verfahren zu einer Erkennung von Verunreinigungen auf einer Schutzscheibe eines Lidarsensors wird ein Erfassungsbereich des Lidarsensors in mehrere Sektoren unterteilt, wobei sektorenweise ermittelt wird, ob im jeweiligen Sektor eine Verunreinigung auf der Schutzscheibe vorliegt. Hierzu wird erfindungsgemäß in dem jeweiligen Sektor ein Sektor-Hintergrundrauschen bei unterschiedlichen Empfindlichkeiten eines Empfängers des Lidarsensors ermittelt, wobei dann auf eine Verunreinigung im jeweiligen Sektor geschlossen wird, wenn ein bei höherer Empfindlichkeit ermitteltes Sektor-Hintergrundrauschen nicht signifikant höher ist als ein bei geringerer Empfindlichkeit ermitteltes Sektor-Hintergrundrauschen.

Hierbei wird unter den Begriffen "signifikant geringer" und "signifikant höher" verstanden, dass ein Unterschied der jeweils verglichenen Werte zumindest erkennbar und/oder größer als ein vorgegebener Schwellwert ist.

Verunreinigungen bzw. Verschmutzungen auf der Schutzscheibe oder Frontscheibe eines Lidarsensors führen zu einer Degradation einer Leistungsfähigkeit des Lidarsensors und damit zu einer Einschränkung einer Sicherheit und Verfügbarkeit mit Daten des Lidarsensors arbeitender Systeme, beispielsweise automatisiert, insbesondere hochautomatisiert oder autonom betreibbarer Fahrzeuge und/oder Roboter. Die Erkennung von Verunreinigungen auf der Schutzscheibe des Lidarsensors stellt somit eine Herausforderung für solche Systeme, beispielsweise in einem Level 3+ automatisiert betreibbare Fahrzeuge, dar.

Lidarsensoren senden einen Laserpuls bzw. Laserstrahl aus und detektieren Reflexionen desselben von Objekten innerhalb eines Erfassungsbereichs. Bei einer Verunreinigung der Schutzscheibe wird eine empfangene Leistung sowohl von reflektiertem Licht als auch von Hintergrundlicht reduziert. Das Hintergrundlicht definiert bei gegebener Sensitivität des Empfängers des Lidarsensors ein Rauschverhalten eines den Lidarsensor umfassenden Lidarsystems. Bei einer Verunreinigung nimmt somit eine Anzahl und Intensität dieses Rauschens ab.

Mittels des Verfahrens können derartige, aufgrund von Verunreinigungen der Schutzscheibe hervorgerufene Degradationen der Leistungsfähigkeit des Lidarsensors zuverlässig erkannt werden. Somit können geeignete Maßnahmen eingeleitet werden, welche eine Sicherheit und Verfügbarkeit von Daten von Lidarsensoren verwendenden Systemen sicherstellen und/oder erhöhen.

Wird die Verunreinigung durch Vergleich des Sektor-Hintergrundrauschens bei unterschiedlichen Empfindlichkeiten des Empfängers des Lidarsensors ermittelt, fallen räumliche Inhomogenitäten weniger stark ins Gewicht , da ein Sektor primär mit sich selbst verglichen wird und dieser Vergleich in kurzem zeitlichen Abstand von beispielsweise 100 ms bei einer Abtastrate von 10 Hz erfolgt. Somit haben aus einem Schattenwurf resultierende Effekte oder Störquellen eine geringere Auswirkung auf das Ergebnis.

Eine Wahl des zum Vergleich herangezogenen Schwellwerts ist dabei beispielsweise von einem Sensordesign des Lidarsensors und/oder einem gewünschten Sicherheitsgrad im Systemdesign abhängig. Das heißt, bei insbesondere konservativ ausgebildeten so genannten Level-4-Systemen eines automatisiert betriebenen Fahrzeugs oder Roboters wird beispielsweise ein niedrigerer Schwellwert gewählt, als bei so genannten Level-2-Systemen, bei denen ein Fahrer oder eine Steuerperson zur Übernahme einer Fahraufgabe vorgesehen ist. Alternativ oder zusätzlich ist eine Wahl des Schwellwerts beispielsweise von einem gewünschten Anwendungsbereich eines Daten des Lidarsensors verwendenden Systems abhängig. In diesem Zusammenhang werden beispielsweise Autobahnen in südlichen Staaten der USA weniger sensitiv parametrisiert als Autobahnen in skandinavischen Ländern.

In einer möglichen Ausgestaltung des Verfahrens wird zusätzlich in dem jeweiligen Sektor ein Sektor-Hintergrundrauschen ermittelt und in einem verbleibenden Erfassungsbereich oder dem gesamten Erfassungsbereich wird ein Erfassungsbereich-Hintergrundrauschen ermittelt, wobei dann auf eine Verunreinigung im jeweiligen Sektor geschlossen wird, wenn das Sektor-Hintergrundrauschen signifikant geringer ist als das Erfassungsbereich-Hintergrundrauschen.

In einer möglichen Ausgestaltung des Verfahrens wird alternativ oder zusätzlich dann auf eine Verunreinigung im jeweiligen Sektor geschlossen, wenn ein bei höherer Empfindlichkeit ermitteltes Sektor-Hintergrundrauschen nicht um mindestens 10 % höher ist als ein bei geringerer Empfindlichkeit ermitteltes Sektor-Hintergrundrauschen.

In einer möglichen Ausgestaltung des Verfahrens wird dann auf eine Verunreinigung im jeweiligen Sektor geschlossen, wenn das Sektor-Hintergrundrauschen um mindestens 10 % geringer ist als das Erfassungsbereich-Hintergrundrauschen.

In einer weiteren möglichen Ausgestaltung des Verfahrens werden das Sektor-Hintergrundrauschen und das Erfassungsbereich-Hintergrundrauschen anhand von einer in einer Signallaufzeit zumindest einer Abtastung zwischen einem Aussenden eines infraroten Laserpulses und einem Empfangen einer Reflexion des infraroten Laserpulses erfassten Intensität eines Hintergrundlichts ermittelt. Dies ermöglicht eine besonders einfache und zuverlässige Ermittlung des Sektor-Hintergrundrauschens und des Erfassungsbereich-Hintergrundrauschens.

In einer weiteren möglichen Ausgestaltung des Verfahrens wird die Erfassung der Intensität des Hintergrundlichts über die gesamte Signallaufzeit durchgeführt und es wird ein Effektivwert der Intensität gebildet. Auch dies ermöglicht eine besonders einfache und zuverlässige Ermittlung des Sektor-Hintergrundrauschens und des Erfassungsbereich-Hintergrundrauschens.

In einer weiteren möglichen Ausgestaltung des Verfahrens wird das Erfassungsbereich-Hintergrundrauschen anhand einer Ermittlung eines Rauschpegels des Hintergrundlichts in dem verbleibenden Erfassungsbereich oder dem gesamten Erfassungsbereich ermittelt. Die ermöglicht eine besonders einfache und zuverlässige Ermittlung des Erfassungsbereich-Hintergrundrauschens.

In einer weiteren möglichen Ausgestaltung des Verfahrens wird das Sektor-Hintergrundrauschen anhand einer Ermittlung eines Rauschpegels des Hintergrundlichts genau einer in dem jeweiligen Sektor durchgeführten Abtastung ermittelt. Dies ermöglicht eine besonders einfache und zuverlässige Ermittlung des Sektor-Hintergrundrauschens.

In einer weiteren möglichen Ausgestaltung des Verfahrens wird das Sektor-Hintergrundrauschen anhand einer Ermittlung eines Rauschpegels des Hintergrundlichts mehrerer oder aller in dem jeweiligen Sektor durchgeführter Abtastungen ermittelt. Auch dies ermöglicht eine besonders einfache und zuverlässige Ermittlung des Sektor-Hintergrundrauschens.

In einer weiteren möglichen Ausgestaltung des Verfahrens wird das Sektor-Hintergrundrauschen ermittelt, indem alle mittels des Empfängers empfangene Leistungen in dem jeweiligen Sektor integriert werden, mittels des Empfängers aufgrund von Reflexionen mehrerer infraroter Laserpulse in dem jeweiligen Sektor empfangene Reflexions-Leistungen integriert werden und aus einer Differenz der integrierten empfangen Leistungen und der integrierten Reflexions-Leistungen eine das Sektor-Hintergrundrauschen beschreibende Gesamtrauschleistung in dem jeweiligen Sektor ermittelt wird. Auch dies ermöglicht eine besonders einfache und zuverlässige Ermittlung des Sektor-Hintergrundrauschens, wobei eine gegebenenfalls vorhandene Abhängigkeit in einer Entfernung zum ersten empfangenen infraroten Laserpuls ausgeschlossen werden kann.

In einer weiteren möglichen Ausgestaltung des Verfahrens wird die Empfindlichkeit des Empfängers anhand einer Arbeitspunktverschiebung oder durch Änderung eines internen Verstärkungsfaktors des Empfängers eingestellt. Durch eine Erhöhung der Empfindlichkeit des Lidarsensors wird das durch das Hintergrundlicht erzeugte Hintergrundrauschen gesteigert.

Die Vorrichtung zu einer Erkennung von Verunreinigungen auf einer Schutzscheibe eines Lidarsensors zeichnet sich dadurch aus, dass ein Erfassungsbereich des Lidarsensors in mehrere Sektoren unterteilt ist und eine Datenverarbeitungseinheit ausgebildet ist, sektorenweise zu ermitteln, ob im jeweiligen Sektor eine Verunreinigung auf der Schutzscheibe vorliegt. Hierzu ermittelt die Datenverarbeitungseinheit erfindungsgemäß in dem jeweiligen Sektor ein Sektor-Hintergrundrauschen bei unterschiedlichen Empfindlichkeiten eines Empfängers des Lidarsensors und schließt dann auf eine Verunreinigung im jeweiligen Sektor, wenn ein bei höherer Empfindlichkeit ermitteltes Sektor-Hintergrundrauschen nicht signifikant höher ist als ein bei geringerer Empfindlichkeit ermitteltes Sektor-Hintergrundrauschen.

Mittels der Vorrichtung können aufgrund von Verunreinigungen der Schutzscheibe hervorgerufene Degradationen der Leistungsfähigkeit des Lidarsensors zuverlässig erkannt werden. Somit können geeignete Maßnahmen eingeleitet werden, welche eine Sicherheit und Verfügbarkeit von Daten von Lidarsensoren verwendenden Systemen sicherstellen und/oder erhöhen.

In einer möglichen Ausgestaltung der Vorrichtung ermittelt die Datenverarbeitungseinheit zusätzlich in dem jeweiligen Sektor ein Sektor-Hintergrundrauschen und in einem verbleibenden Erfassungsbereich oder dem gesamten Erfassungsbereich ein Erfassungsbereich-Hintergrundrauschen und schließt dann auf eine Verunreinigung im jeweiligen Sektor, wenn das Sektor-Hintergrundrauschen signifikant geringer ist als das Erfassungsbereich-Hintergrundrauschen.

In einer möglichen Verwendung der zuvor genannten Vorrichtung in einem Fahrzeug und/oder Roboter, ist der zumindest eine Lidarsensor zu einer Umgebungserfassung vorgesehen. Mittels der Vorrichtung können dabei, die Umgebungserfassung beeinträchtigende Verunreinigungen der Schutzscheibe des zumindest einen Lidarsensors einfach und zuverlässig erkannt werden.

In einer möglichen Ausgestaltung der Verwendung wird anhand von mittels des zumindest eines Lidarsensors erfassten Daten ein automatisierter, insbesondere hochautomatisierter oder autonomer, Betrieb des Fahrzeugs und/oder Roboters ausgeführt und bei Erkennung zumindest einer Verunreinigung auf der Schutzscheibe des zumindest einen Lidarsensors wird der automatisierte Betrieb eingeschränkt und/oder zumindest eine Maßnahme zu einer Beseitigung der zumindest einen Verunreinigung wird eingeleitet. Somit können eine Zuverlässigkeit und Sicherheit des Fahrzeug- und/oder Roboterbetriebs signifikant erhöht werden.

Ausführungsbeispiele der Erfindung werden im Folgenden anhand von Zeichnungen näher erläutert.

Dabei zeigen:
- Fig. 1: schematisch eine perspektivische Ansicht eines Lidarsensors und mehrerer Objekte und
- Fig. 2: schematisch einen zeitlichen Verlauf eines Sendesignals und eines Empfangssignals eines Lidarsensors.

Einander entsprechende Teile sind in allen Figuren mit den gleichen Bezugszeichen versehen.

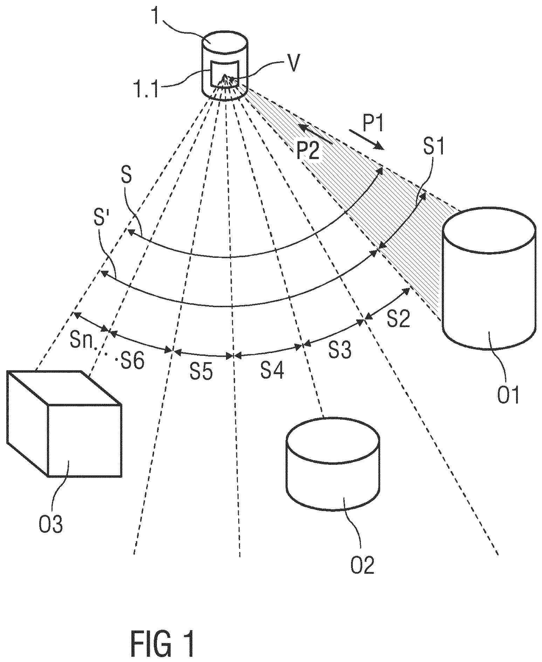

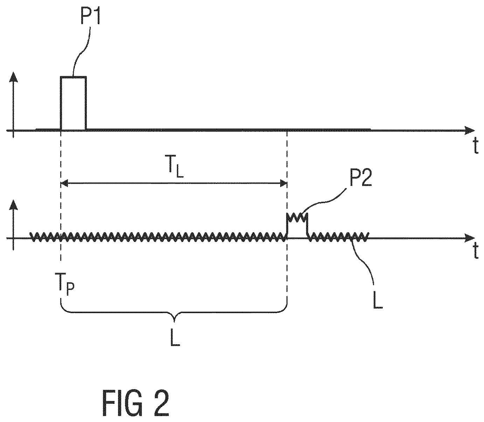

In Figur 1 ist eine perspektivische Ansicht eines Lidarsensors 1 und mehrerer Objekte O1 bis O3 dargestellt. Figur 2 zeigt einen Verlauf eines mittels eines Lidarsensors 1 gesendeten infraroten Laserpulses P1 und einen Verlauf einer von einem Empfänger des Lidarsensors 1 empfangenen Reflexion P2 in Abhängigkeit von der Zeit t. Die Reflexion P2 entsteht durch Reflexion des gesendeten Laserpulses P1 an zumindest einem Objekt O1 bis O3.

Der Lidarsensor 1 ist beispielsweise Bestandteil eines nicht näher dargestellten Fahrzeugs und/oder eines nicht näher dargestellten Roboters und dabei zu einer Umgebungserfassung vorgesehen. Anhand von mittels des Lidarsensors 1 erfassten Daten wird dabei ein automatisierter, insbesondere hochautomatisierter oder autonomer, Betrieb des Fahrzeugs und/oder Roboters ausgeführt.

Der Lidarsensor 1 umfasst eine nicht näher dargestellte Laseranordnung zur Erzeugung von infraroten Laserpulsen P1, die auf eine abzutastende Szene gesendet werden. Dabei kann die Laseranordnung eine einzelne Laserdiode oder ein Laserdiodenarray umfassen.

Weiterhin umfasst der Lidarsensor 1 einen nicht näher dargestellten, als Photodetektoranordnung ausgebildeten Empfänger zur Detektion von infraroten Empfangsimpulsen, das heißt den Reflexionen P2, die in der abzutastenden Szene zurückreflektiert werden. Dabei kann die Photodetektoranordnung eine einzelne Empfangsdiode oder ein Empfangsdiodenarray umfassen.

Die Laserpulse P1 und Reflexionen P2 können unmittelbar oder über eine nicht näher dargestellte Ablenkeinrichtung von der Laseranordnung zur Szene bzw. von der Szene zum Empfänger geführt werden. Die Ablenkvorrichtung kann dabei einen rotierenden Spiegel, ein rotierendes Prisma und/oder ein Array mit auslenkbaren Mikrospiegeln umfassen.

Die Laseranordnung und der Empfänger sind hinter zumindest einer Schutzscheibe 1.1, auch als Schutzfenster oder Lidarfenster bezeichnet, angeordnet und somit vor mechanischer Beschädigung und Eindringen von Fremdstoffen zumindest weitestgehend geschützt. Die Laserpulse P1 werden dabei durch die Schutzscheibe 1.1 von der Laseranordnung zur Szene gesendet. Die Reflexionen P2 gelangen von der Szene durch die Schutzscheibe 1.1 zum Empfänger.

Ein Scanbereich oder Erfassungsbereich S des Lidarsensors 1 ist in mehrere Sektoren S1 bis Sn eingeteilt. Der von der Laseranordnung erzeugte infrarote Laserpuls P1 wird durch die Schutzscheibe 1.1 hindurch auf die abzutastende Szene gelenkt und an den dort vorhandenen Objekten O1 bis O3 zurückreflektiert. Der zurückreflektierte infrarote Laserpuls, das heißt die Reflexion P2, gelangt über die Schutzscheibe 1.1 oder über eine weitere nicht gezeigte Schutzscheibe zum Empfänger.

Befindet sich auf der Schutzscheibe 1.1 oder der weiteren nicht gezeigten Schutzscheibe im Bereich eines Sektors S1 eine Verunreinigung V, wird in diesem Sektor S1 eine empfangene Leistung der Reflexion P2 als auch eine empfangene Leistung eines Hintergrundlichts L reduziert. Damit wird auch ein Rauschpegel des Hintergrundlichts L in diesem Sektor S1 reduziert. Dieser Rauschpegel wird nachfolgend auch als Hintergrundrauschen bezeichnet.

Dieses Hintergrundrauschen bestimmt zusammen mit einer Empfindlichkeit des Lidarsensors 1 ein Rauschverhalten des Lidarsensors 1. Die Empfindlichkeit des Lidarsensors 1 wird dabei durch eine Empfindlichkeit des beispielsweise als Photodetektoranordnung ausgebildeten Empfängers bestimmt. Das Hintergrundrauschen ist in Figur 2 im zeitlichen Verlauf der empfangenen Reflexion P2 und des Hintergrundlichts L ersichtlich.

Gemäß der Darstellung von Figur 2 erzeugt die Laseranordnung für eine Abtastung der Szene zu einem bestimmten Zeitpunkt T_{P} einen Laserpuls P1. Dieser wird auf die abzutastende Szene ausgelenkt. Bei der mittels des Lidarsensors 1 durchgeführten Umgebungserfassung werden die einzelnen Sektoren S1 bis Sn des Erfassungsbereichs S insbesondere jeweils mit einer Mehrzahl von Lidarpulsen P1 abgetastet.

Die Laserpulse P1 werden an einem in der Szene vorhandenen Objekt O1 bis O3 als Reflexion P2 zum Lidarsensor 1 zurückreflektiert. Nach einer vom Abstand des jeweiligen Objekts O1 bis O3 zum Lidarsensor 1 abhängigen Signallaufzeit T_{L} erreicht die entsprechende Reflexion P2 den Empfänger des Lidarsensors 1 und wird von diesem als Empfangsimpuls detektiert.

In der Signallaufzeit T_{L} zwischen dem Aussenden eines Laserpulses P1 und dem Empfangen der zugehörigen Reflexion P2 detektiert der Empfänger das verrauschte Hintergrundlicht L. Ein Rauschpegel des Hintergrundlichts L wird beispielsweise durch Erfassen einer Intensität des Hintergrundlichts L über einen vorgegebenen Zeitbereich, beispielsweise über die Signallaufzeit T_{L}, und durch Ermittlung eines Effektivwerts der in diesem Zeitbereich erfassten Intensität ermittelt.

Das Hintergrundrauschen in einem Sektor S1 bis Sn, im Folgenden als Sektor-Hintergrundrauschen bezeichnet, wird anhand einer Ermittlung eines Rauschpegels des Hintergrundlichts L genau einer in dem jeweiligen Sektor S1 bis Sn durchgeführten Abtastung ermittelt. Alternativ wird das Sektor- Hintergrundrauschen anhand einer Ermittlung eines Rauschpegels des Hintergrundlichts L mehrerer oder aller in dem jeweiligen Sektor S1 bis Sn durchgeführter Abtastungen ermittelt.

Alternativ wird das Sektor-Hintergrundrauschen ermittelt, indem alle mittels des Empfängers empfangene Leistungen in dem jeweiligen Sektor S1 bis Sn integriert werden und mittels des Empfängers aufgrund von Reflexionen P2 mehrerer infraroter Laserpulse P1 in dem jeweiligen Sektor S1 bis Sn empfangene Reflexions-Leistungen werden integriert. Anschließend wird aus einer Differenz der integrierten empfangen Leistungen und der integrierten Reflexions-Leistungen eine das Sektor-Hintergrundrauschen beschreibende Gesamtrauschleistung in dem jeweiligen Sektor S1 bis Sn ermittelt, so dass eine gegebenenfalls vorliegende Abhängigkeit in der Entfernung zur ersten empfangenen Reflexion P2 ausgeschlossen werden kann.

Eine Überprüfung, ob eine Verunreinigung V auf der Schutzscheibe 1.1 vorhanden ist, wird insbesondere mittels einer nicht näher dargestellten Datenverarbeitungseinheit sektorenweise durchgeführt. Hierbei wird überprüft, ob im jeweiligen Sektor S1 bis Sn eine Verunreinigung V auf der Schutzscheibe 1.1 vorliegt.

Nachfolgend wird diese Überprüfung am Beispiel des Sektors S1 beschrieben. Für die weiteren Sektoren S2 bis Sn erfolgt die Überprüfung in analoger Weise.

Während eines Scans über den gesamten Erfassungsbereich S wird das Sektor-Hintergrundrauschen im Sektor S1 und zusätzlich ein Erfassungsbereich-Hintergrundrauschen im gesamten Erfassungsbereich S oder in einem abzüglich des Sektors S1 und von den Sektoren S2 bis Sn gebildeten verbleibenden Erfassungsbereich S' ermittelt. Auch das Erfassungsbereich-Hintergrundrauschen wird beispielsweise anhand einer Ermittlung eines Rauschpegels des Hintergrundlichts L in dem verbleibenden Erfassungsbereich S' oder dem gesamten Erfassungsbereich S ermittelt. Es wird dann auf eine Verunreinigung V der Schutzscheibe 1.1 im Sektor S1 geschlossen, wenn das Sektor-Hintergrundrauschen signifikant geringer ist als das Erfassungsbereich-Hintergrundrauschen.

Alternativ oder zusätzlich wird das Sektor-Hintergrundrauschen im Sektor S1 zu unterschiedlichen Zeitpunkten bei unterschiedlich eingestellten Empfindlichkeiten des Empfängers ermittelt. Die Empfindlichkeit des Empfängers wird dabei beispielsweise durch eine Arbeitspunktverschiebung oder durch Variation eines internen Verstärkungsfaktors des Empfängers eingestellt. Insbesondere erfolgen die Messungen mit unterschiedlichen Empfindlichkeiten dabei in zeitlich kurzen Abständen, beispielsweise in Abständen von 100 ms bei einer Abtastrate von 10 Hz. Auf eine Verunreinigung V der Schutzscheibe 1.1 im Sektor S1 wird dann geschlossen, wenn das bei höherer Empfindlichkeit ermittelte Sektor-Hintergrundrauschen nicht signifikant höher ist als das bei geringerer Empfindlichkeit ermittelte Sektor-Hintergrundrauschen. Die Ermittlung einer Verunreinigung V in dieser Ausgestaltung hat den Vorteil, dass räumliche Inhomogenitäten nur geringe Auswirkungen auf das Messergebnis haben, da ein Sektor S1 primär mit sich selbst verglichen wird und dieser Vergleich aufgrund der Abtastrate in kurzem zeitlichen Abstand erfolgt. Effekte durch Schattenwurf oder Störquellen haben somit eine geringere Auswirkung auf das Messergebnis.

Bei Erkennung zumindest einer Verunreinigung V auf der Schutzscheibe 1.1 des Lidarsensors 1 kann somit bei einer Anwendung in einem Fahrzeug und/oder Roboter der automatisierte Betrieb eingeschränkt werden und/oder zumindest eine Maßnahme zu einer Beseitigung der zumindest einen Verunreinigung V kann eingeleitet werden.

### Bezugszeichenliste

- 1: Lidarsensor
- 1.1: Schutzscheibe

- L: Hintergrundlicht
- O1 bis O3: Objekt
- P1: Laserpuls
- P2: Reflexion
- S: Erfassungsbereich
- S1 bis Sn: Sektor
- S': verbleibender Erfassungsbereich
- t: Zeit
- T_{L}: Signallaufzeit
- T_{P}: Zeitpunkt
- V: Verunreinigung

## Patentansprüche

1. Verfahren zu einer Erkennung von Verunreinigungen (V) auf einer Schutzscheibe (1.1) eines Lidarsensors (1), wobei ein Erfassungsbereich (S) des Lidarsensors (1) in mehrere Sektoren (S1 bis Sn) unterteilt wird, wobei sektorenweise ermittelt wird, ob im jeweiligen Sektor (S1 bis Sn) eine Verunreinigung (V) auf der Schutzscheibe (1.1) vorliegt,
**dadurch gekennzeichnet, dass** zur Ermittlung des Vorliegens einer Verunreinigung (V) auf der Schutzscheibe (1.1) in dem jeweiligen Sektor (S1 bis Sn) ein Sektor-Hintergrundrauschen bei unterschiedlichen Empfindlichkeiten eines Empfängers des Lidarsensors (1) ermittelt wird, wobei dann auf eine Verunreinigung (V) im jeweiligen Sektor (S1 bis Sn) geschlossen wird, wenn ein bei höherer Empfindlichkeit ermitteltes Sektor-Hintergrundrauschen nicht signifikant höher ist als ein bei geringerer Empfindlichkeit ermitteltes Sektor-Hintergrundrauschen.

2. Verfahren nach Anspruch 1,
**dadurch gekennzeichnet, dass** zur Ermittlung des Vorliegens einer Verunreinigung (V) auf der Schutzscheibe (1.1) in dem jeweiligen Sektor (S1 bis Sn) ein Sektor-Hintergrundrauschen ermittelt wird und in einem verbleibenden Erfassungsbereich (S') oder dem gesamten Erfassungsbereich (S) ein Erfassungsbereich-Hintergrundrauschen ermittelt wird, wobei dann auf eine Verunreinigung (V) im jeweiligen Sektor (S1 bis Sn) geschlossen wird, wenn das Sektor-Hintergrundrauschen signifikant geringer ist als das Erfassungsbereich-Hintergrundrauschen.

3. Verfahren nach Anspruch 1 oder 2,
**dadurch gekennzeichnet, dass** das Sektor-Hintergrundrauschen und das Erfassungsbereich-Hintergrundrauschen anhand von einer in einer Signallaufzeit (T_{L}) zumindest einer Abtastung zwischen einem Aussenden eines infraroten Laserpulses (P1) und einem Empfangen einer Reflexion (P2) des infraroten Laserpulses (P1) erfassten Intensität eines Hintergrundlichts (L) ermittelt werden.

4. Verfahren nach Anspruch 3,
**dadurch gekennzeichnet, dass** die Erfassung der Intensität des Hintergrundlichts (L) über die gesamte Signallaufzeit (T_{L}) durchgeführt wird und ein Effektivwert der Intensität gebildet wird.

5. Verfahren nach Anspruch 3 oder 4,
**dadurch gekennzeichnet, dass** das Erfassungsbereich-Hintergrundrauschen anhand einer Ermittlung eines Rauschpegels des Hintergrundlichts (L) in dem verbleibenden Erfassungsbereich (S') oder dem gesamten Erfassungsbereich (S) ermittelt wird.

6. Verfahren nach Anspruch 3 oder 4,
**dadurch gekennzeichnet, dass** das Sektor-Hintergrundrauschen anhand
- einer Ermittlung eines Rauschpegels des Hintergrundlichts (L) genau einer in dem jeweiligen Sektor (S1 bis Sn) durchgeführten Abtastung ermittelt wird oder
- einer Ermittlung eines Rauschpegels des Hintergrundlichts (L) mehrerer oder aller in dem jeweiligen Sektor (S1 bis Sn) durchgeführter Abtastungen ermittelt wird.

7. Verfahren nach Anspruch 3 oder 4,
**dadurch gekennzeichnet, dass** das Sektor-Hintergrundrauschen ermittelt wird, indem
- alle mittels des Empfängers empfangenen Leistungen in dem jeweiligen Sektor (S1 bis Sn) integriert werden,
- mittels des Empfängers aufgrund von Reflexionen (P2) mehrerer infraroter Laserpulse (P1) in dem jeweiligen Sektor (S1 bis Sn) empfangene Reflexions-Leistungen integriert werden und
- aus einer Differenz der integrierten empfangen Leistungen und der integrierten Reflexions-Leistungen eine das Sektor-Hintergrundrauschen beschreibende Gesamtrauschleistung in dem jeweiligen Sektor (S1 bis Sn) ermittelt wird.

8. Verfahren nach einem der vorhergehenden Ansprüche,
**dadurch gekennzeichnet, dass** die Empfindlichkeit des Empfängers anhand einer Arbeitspunktverschiebung oder durch Änderung eines internen Verstärkungsfaktors des Empfängers eingestellt wird.

9. Vorrichtung zu einer Erkennung von Verunreinigungen (V) auf einer Schutzscheibe (1.1) eines Lidarsensors (1), wobei
- ein Erfassungsbereich (S) des Lidarsensors (1) in mehrere Sektoren (S1 bis Sn) unterteilt ist und
- eine Datenverarbeitungseinheit ausgebildet ist, sektorenweise zu ermitteln, ob im jeweiligen Sektor (S1 bis Sn) eine Verunreinigung (V) auf der Schutzscheibe (1.1) vorliegt,
**dadurch gekennzeichnet, dass** zur Ermittlung des Vorliegens einer Verunreinigung (V) auf der Schutzscheibe (1.1) die Datenverarbeitungseinheit in dem jeweiligen Sektor (S1 bis Sn) ein Sektor-Hintergrundrauschen bei unterschiedlichen Empfindlichkeiten eines Empfängers des Lidarsensors (1) ermittelt und dann auf eine Verunreinigung (V) im jeweiligen Sektor (S1 bis Sn) schließt, wenn ein bei höherer Empfindlichkeit ermitteltes Sektor-Hintergrundrauschen nicht signifikant höher ist als ein bei geringerer Empfindlichkeit ermitteltes Sektor-Hintergrundrauschen.

10. Vorrichtung nach Anspruch 9,
**dadurch gekennzeichnet, dass** zur Ermittlung des Vorliegens einer Verunreinigung (V) auf der Schutzscheibe (1.1) die Datenverarbeitungseinheit in dem jeweiligen Sektor (S1 bis Sn) ein Sektor-Hintergrundrauschen ermittelt und in einem verbleibenden Erfassungsbereich (S') oder dem gesamten Erfassungsbereich (S) ein Erfassungsbereich-Hintergrundrauschen ermittelt und dann auf eine Verunreinigung (V) im jeweiligen Sektor (S1 bis Sn) schließt, wenn das Sektor-Hintergrundrauschen signifikant geringer ist als das Erfassungsbereich-Hintergrundrauschen

11. Verwendung einer Vorrichtung nach Anspruch 9 oder 10 in einem Fahrzeug und/oder Roboter, wobei der zumindest eine Lidarsensor (1) zu einer Umgebungserfassung vorgesehen ist.

12. Verwendung nach Anspruch 11, wobei
- anhand von mittels des zumindest eines Lidarsensors (1) erfassten Daten ein automatisierter, insbesondere hochautomatisierter oder autonomer, Betrieb des Fahrzeugs und/oder Roboters ausgeführt wird und
- bei Erkennung zumindest einer Verunreinigung (V) auf der Schutzscheibe (1.1) des zumindest einen Lidarsensors (1) der automatisierte Betrieb eingeschränkt wird und/oder zumindest eine Maßnahme zu einer Beseitigung der zumindest einen Verunreinigung (V) eingeleitet wird.

## Claims

1. Method for detecting soiling (V) on a protective screen (1.1) of a lidar sensor (1), wherein a capture region (S) of the lidar sensor (1) is subdivided into a plurality of sectors (S1 to Sn), wherein it is determined sector by sector whether there is soiling (V) on the protective screen (1.1) in the respective sector (S1 to Sn),
**characterized in that**, in order to determine the presence of soiling (V) on the protective screen (1.1) in the respective sector (S1 to Sn), sector background noise is determined at different sensitivities of a receiver of the lidar sensor (1), wherein soiling (V) in the respective sector (S1 to Sn) is inferred when sector background noise determined at a higher sensitivity is not significantly higher than sector background noise determined at a lower sensitivity.

2. Method according to Claim 1,
**characterized in that**, in order to determine the presence of soiling (V) on the protective screen (1.1), sector background noise is determined in the respective sector (S1 to Sn) and capture region background noise is determined in a remaining capture region (S') or the entire capture region (S), wherein soiling (V) in the respective sector (S1 to Sn) is inferred when the sector background noise is significantly less than the capture region background noise.

3. Method according to Claim 1 or 2,
**characterized in that** the sector background noise and the capture region background noise are determined on the basis of an intensity of background light (L) captured in a signal propagation time (T_{L}) of at least one scan between emission of an infrared laser pulse (P1) and reception of a reflection (P2) of the infrared laser pulse (P1).

4. Method according to Claim 3,
**characterized in that** the intensity of the background light (L) is captured over the entire signal propagation time (T_{L}) and an effective value of the intensity is formed.

5. Method according to Claim 3 or 4,
**characterized in that** the capture region background noise is determined on the basis of a determination of a noise level of the background light (L) in the remaining capture region (S') or the entire capture region (S).

6. Method according to Claim 3 or 4,
**characterized in that** the sector background noise is determined on the basis of
- a determination of a noise level of the background light (L) of exactly one scan performed in the respective sector (S1 to Sn), or
- a determination of a noise level of the background light (L) of a plurality of or all of the scans performed in the respective sector (S1 to Sn).

7. Method according to Claim 3 or 4,
**characterized in that** the sector background noise is determined by
- integrating all the powers received by means of the receiver in the respective sector (S1 to Sn),
- integrating reflection powers received in the respective sector (S1 to Sn) by means of the receiver on account of reflections (P2) of a plurality of infrared laser pulses (P1), and
- determining a total noise power describing the sector background noise in the respective sector (S1 to Sn) from a difference between the integrated received powers and the integrated reflection powers.

8. Method according to one of the preceding claims,
**characterized in that** the sensitivity of the receiver is set on the basis of an operating point shift or by changing an internal gain factor of the receiver.

9. Apparatus for detecting soiling (V) on a protective screen (1.1) of a lidar sensor (1), wherein
- a capture region (S) of the lidar sensor (1) is subdivided into a plurality of sectors (S1 to Sn), and
- a data processing unit is designed to determine sector by sector whether there is soiling (V) on the protective screen (1.1) in the respective sector (S1 to Sn), **characterized in that**, in order to determine the presence of soiling (V) on the protective screen (1.1), the data processing unit determines sector background noise in the respective sector (S1 to Sn) at different sensitivities of a receiver of the lidar sensor (1) and infers soiling (V) in the respective sector (S1 to Sn) when sector background noise determined at a higher sensitivity is not significantly higher than sector background noise determined at a lower sensitivity.

10. Apparatus according to Claim 9,
**characterized in that**, in order to determine the presence of soiling (V) on the protective screen (1.1), the data processing unit determines sector background noise in the respective sector (S1 to Sn) and determines capture region background noise in a remaining capture region (S') or the entire capture region (S) and infers soiling (V) in the respective sector (S1 to Sn) when the sector background noise is significantly less than the capture region background noise.

11. Use of an apparatus according to Claim 9 or 10 in a vehicle and/or robot, wherein the at least one lidar sensor (1) is provided for capturing the surroundings.

12. Use according to Claim 11, wherein
- automated, in particular highly automated or autonomous, operation of the vehicle and/or robot is carried out on the basis of data captured by means of the at least one lidar sensor (1), and
- when at least one instance of soiling (V) is detected on the protective screen (1.1) of the at least one lidar sensor (1), automated operation is restricted and/or at least one measure for eliminating the at least one instance of soiling (V) is initiated.

## Revendications

1. Procédé de détection de contaminations (V) sur un disque de protection (1.1) d'un capteur lidar (1), dans lequel une zone de détection (S) du capteur lidar (1) est divisée en plusieurs secteurs (S1 à Sn), dans lequel il est déterminé par secteurs si une contamination (V) est présente sur le disque de protection (1.1) dans le secteur respectif (S1 à Sn),
**caractérisé en ce que**, pour déterminer la présence d'une contamination (V) sur le disque de protection (1.1) dans le secteur respectif (S1 à Sn), un bruit de fond de secteur est déterminé à des sensibilités différentes d'un récepteur du capteur lidar (1), dans lequel on conclut alors à une contamination (V) dans le secteur respectif (S1 à Sn), lorsque le bruit de fond de secteur déterminé à une sensibilité supérieure n'est pas significativement supérieur à un bruit de fond de secteur déterminé à une sensibilité inférieure.

2. Procédé selon la revendication 1,
**caractérisé en ce que**, pour déterminer la présence d'une contamination (V) sur le disque de protection (1.1) dans le secteur respectif (S1 à Sn), un bruit de fond de secteur est déterminé et dans une zone de détection restante (S') ou dans toute la zone de détection (S), un bruit de fond de zone de détection est déterminé, dans lequel on conclut alors à une contamination (V) dans le secteur respectif (S1 à Sn) lorsque le bruit de fond du secteur est significativement inférieur au bruit de fond de la zone de détection.

3. Procédé selon la revendication 1 ou 2,
**caractérisé en ce que** le bruit de fond de secteur et le bruit de fond de zone de détection sont déterminés sur la base d'une intensité d'une lumière de fond (L) captée pendant un temps de propagation de signal (T_{L}) d'au moins un balayage entre l'émission d'une impulsion laser infrarouge (P1) et la réception d'une réflexion (P2) de l'impulsion laser infrarouge (P1).

4. Procédé selon la revendication 3,
**caractérisé en ce que** la détection de l'intensité de la lumière de fond (L) est effectuée sur la totalité du temps de propagation de signal (T_{L}) et **en ce qu'**une valeur efficace de l'intensité est calculée.

5. Procédé selon la revendication 3 ou 4,
**caractérisé en ce que** le bruit de fond de zone de détection est déterminé sur la base d'une détermination d'un niveau de bruit de la lumière de fond (L) dans la zone de détection restante (S') ou dans l'ensemble de la zone de détection (S).

6. Procédé selon la revendication 3 ou 4,
**caractérisé en ce que** le bruit de fond du secteur est déterminé sur la base
- d'une détermination d'un niveau de bruit de la lumière de fond (L) d'exactement un balayage effectué dans le secteur respectif (S1 à Sn), ou
- d'une détermination d'un niveau de bruit de la lumière de fond (L) de plusieurs ou de la totalité des balayages effectués dans le secteur respectif (S1 à Sn).

7. Procédé selon la revendication 3 ou 4,
**caractérisé en ce que** le bruit de fond du secteur est déterminé **en ce que**
- toutes les puissances reçues au moyen du récepteur sont intégrées dans le secteur respectif (S1 à Sn),
- les puissances de réflexion reçues au moyen du récepteur du fait des réflexions (P2) de plusieurs impulsions laser infrarouges (P1) dans le secteur respectif (S1 à Sn) sont intégrées et
- à partir d'une différence entre les puissances reçues intégrées et les puissances de réflexion intégrées, une puissance de bruit totale décrivant le bruit de fond de secteur est déterminée dans le secteur respectif (S1 à Sn).

8. Procédé selon l'une des revendications précédentes,
**caractérisé en ce que** la sensibilité du récepteur est ajustée par un décalage du point de fonctionnement ou par modification d'un facteur d'amplification interne du récepteur.

9. Dispositif de détection de contaminations (V) sur un disque de protection (1.1) d'un capteur lidar (1), dans lequel
- une zone de détection (S) du capteur lidar (1) est divisée en plusieurs secteurs (S1 à Sn) et
- une unité de traitement de données est conçue pour déterminer par secteur si une contamination (V) est présente sur le disque de protection (1.1) dans le secteur respectif (S1 à Sn),
**caractérisé en ce que**, pour déterminer la présence d'une contamination (V) sur le disque de protection (1.1), l'unité de traitement de données détermine dans le secteur respectif (S1 à Sn) un bruit de fond de secteur à des sensibilités différentes d'un récepteur du capteur lidar (1) et conclut alors à une contamination (V) dans le secteur respectif (S1 à Sn) lorsque le bruit de fond de secteur déterminé à une sensibilité supérieure n'est pas significativement supérieur à un bruit de fond de secteur déterminé à une sensibilité inférieure.

10. Dispositif selon la revendication 9,
**caractérisé en ce que**, pour déterminer la présence d'une contamination (V) sur le disque de protection (1.1), l'unité de traitement de données détermine dans le secteur respectif (S1 à Sn) un bruit de fond de secteur et détermine un bruit de fond de zone de détection dans une zone de détection restante (S') ou dans toute la zone de détection (S), et conclut alors à une contamination (V) dans le secteur respectif (S1 à Sn) lorsque le bruit de fond du secteur est significativement inférieur au bruit de fond de la zone de détection.

11. Utilisation d'un dispositif selon la revendication 9 ou 10 dans un véhicule et/ou un robot, dans laquelle ledit au moins un capteur lidar (1) est prévu pour une détection d'environnement.

12. Utilisation selon la revendication 11, dans laquelle
- il est procédé à un fonctionnement automatisé, notamment fortement automatisé ou autonome, du véhicule et/ou du robot sur la base de données acquises au moyen dudit au moins un capteur lidar (1), et
- lors d'une détection d'au moins une contamination (V) sur le disque de protection (1.1) d'au moins un capteur lidar (1), le fonctionnement automatisé est restreint et/ou au moins une mesure est déclenchée pour l'élimination de ladite au moins une contamination (V).
